Europäisches Patentamt

European Patent Office

Office européen des brevets

(19)

(11) Veröffentlichungsnummer: **0 012 209**
**B1**

(12) **EUROPÄISCHE PATENTSCHRIFT**

(45) Veröffentlichungstag der Patentschrift: **13.10.82**

(51) Int. Cl.³: **H 02 B  1/02,** A 47 B  57/40

(21) Anmeldenummer: **79104262.5**

(22) Anmeldetag: **02.11.79**

(54) Schalt- oder Verteilerschrank mit einem Schwenkrahmen.

(30) Priorität: **08.11.78 DE  7833180  U**

(43) Veröffentlichungstag der Anmeldung:
**25.06.80 Patentblatt 80/13**

(45) Bekanntmachung des Hinweises auf die Patenterteilung:
**13.10.82 Patentblatt 82/41**

(84) Benannte Vertragsstaaten:
**AT BE CH FR GB IT NL SE**

(56) Entgegenhaltungen:
**DE - A - 2 021 641**
**US - A - 4 064 996**

(73) Patentinhaber: **Rittal-Werk Rudolf Loh GmbH &
Co. KG
Auf dem Stützelberg
D-6348 Herborn (DE)**

(72) Erfinder: **Leukel, Gerhard
Spitzweg 12
D-6344 Dietzhölztal 3 (DE)**
Erfinder: **Lehr, Lothar
Dresselndorfer Strasse 16
D-5909 Burbach-Oberdresselndorf (DE)**

(74) Vertreter: **Vogel, Georg
Auenweg 14
D-7141 Schwieberdingen (DE)**

Courier Press, Leamington Spa, England.

Schalt- oder Verteilerschrank mit einem Schwenkrahmen

Die Erfindung betrifft einen Schalt- oder Verteilerschrank mit einem Schwenkrahmen, der mittels zweier Lagerzapfen drehbar an einem unteren und einem oberen Querträger gelagert ist und dessen vertikale Rahmenschenkel U-förmig abgewinkelt sind, wobei der Mittelsteg zusätzlich bis zu den Endkanten der Seitenschenkel U-förmig und symmetrisch zu den Seitenschenkeln abgewinkelt ist und in dem mit den Endkanten der Seitenschenkel bündigen Stegteil eine vertikale Reihe von Löchern zum Einhänger von mit ausgestanzten Haken versehenen Führungsschienen aufweist.

Bei diesen bekannten Schalt- oder Verteilerschränken ist der Aufbau des Schwenkrahmens ähnlich dem Aufbau der Rahmenschenkel eines Regalbausystems nach der US—A—4 064 996 gewählt. Durch die U-förmige Ausbildung der Rahmenschenkel wird eine beträchtliche Verbesserung der Stabilität des Schwenkrahmens erreicht. Bei dem bekannten Regalbausystem werden mit den Rahmenschenkeln Querträger verbunden, welche an beiden Enden mit Einhängebügeln versehen sind. Diese Einhängebügel umgreifen ein abgekantetes Außenteil des Rahmenschenkels und werden mit ihren am Ende des äußeren Seitenschenkels angebrachten Haken in die Löcher im Stegteil des Rahmenschenkels eingehängt. Auf den Querträger wird eine Ablageplatte oder dgl. aufgelegt. Diese Art von Querträgern sind aber nicht als Führungsschienen für Geräteeinschübe oder Geräteschienen geeignet, welche sich weit über die Tiefe des Rahmenschenkels hinaus erstrecken.

Es ist Aufgabe der Erfindung, einen Schalt- oder Verteilerschrank der eingangs erwähnten Art so auszugestalten, daß an den aus Regalbausystemen bekannten Rahmenschenkeln einfache Führungsschienen für Geräteeinschübe oder Geräteschienen angebracht werden können, die über die Tiefe des Rahmenschenkels hinaus den Geräteeinschub oder die Geräteschiene führen und tragen und dabei in Einschubrichtung an mindestens zwei im Abstand zueinander liegenden Stellen am Rahmenschenkel befestigt werden können, um die Belastung durch den Geräteeinschub oder die Geräteschiene eindeutig abfangen zu können.

Diese Aufgabe wird nach der Erfindung dadurch gelöst, daß die Seitenschenkel des Rahmenschenkels jeweils mit einer Reihe von miteinander fluchtenden Löchern versehen sind, daß die Löcher zum Einhängen von Führungsschienen für Geräteeinschübe oder Geräteschienen im Stegteil in gleicher Teilung wie die Löcher in den Seitenschenkeln eingebracht sind, zu diesen aber jeweils um eine halbe Teilung versetzt sind, daß die Führungsschiene aus einer vertikalen Führungsplatte besteht, die im Bereich ihrer Unterkante als horizontaler Auflagesteg rechtwinklig abgewinkelt ist, daß an der Führungsplatte vertikal im Abstand der Teilung der Löcher im Stegteil zwei Haken ausgestanzt und ausgebogen sind, die in ihrer Breite auf die Löcher im Stegteil des Rahmenschenkels abgestimmt sind und zum Auflagesteg hin offen sind, daß an der vertikalen Führungsplatte in vertikal verlaufender Befestigungslappen ausgestanzt und senkrecht zu dieser ausgebogen ist, der in einem Abstand zu den Haken angeordnet ist, welcher dem Abstand der Löcher im Stegteil des Rahmenschenkels von den Seitenschenkeln des Rahmenschenkels entspricht und daß der mit einer Befestigungsaufnahme versehene Befestigungslappen im gleichen vertikalen Abstand zu beiden Haken der Führungsplatte angeordnet und mit einem der Seitenschenkel verbindbar ist.

Bei deiser Ausgesteltung ist der Rahmenschenkel in seinen Seitenschenkeln mit zusätzlichen Löchern zu versehen und die Führungsschienen sind mit den Haken, der Führungsplatte und dem Auflagesteg als einfache Stanz-Biegeteile ausgebildet, die schnell und leicht beidseitig an dem Rahmenschenkel angebracht werden können. Dabei ist die Führungsschiene im Bereich der Haken und der Führungsplatte an dem Rahmenschenkel festgelegt und somit an zwei im Abstand zueinander stehenden Stellen mit dem Rahmenschenkel verbunden. Die Führungsschiene kann daher über ihre gesamte Längsabmessung belastet werden, ohne daß dadurch die Anbringung am Rahmenschenkel verändert oder beeinträchtigt wird.

Nach einer Ausgestaltung is vorgesehen, daß die Reihen von Löchern in den Seitenschenkeln des Rahmenschenkels als im Querschnitt quadratische Aufnahmen für darin festlegbare Käfigmuttern ausgebildet sind.

Damit wird die Möglichkeit geschaffen, daß beide Seitenschenkel der vertikalen Rahmenschenkel Käfigmuttern aufnehmen und so zur Befestigung ausgenützt werden können.

Eine Zweipunktbefestigung für die Führungsschienen wird dadurch erreicht, daß die Löcher in den Seitenschenkeln paarweise in gleichmäßiger Teilung über die Länge der Seitenschenkel angeordnet sind.

Für das Einhängen der Führungsschienen ist nach einer Ausgestaltung vorgesehen, daß die Löcher zum Einhängen von Führungsschienen im Querschnitt quadratisch ausgebildet sind, wobei zwei Seiten der Löcher parallel zu den Seitenschenkeln ausgerichtet sind. Darüber hinaus ist vorgesehen, daß die Löcher zum Einhängen von Führungsschienen in gleicher Teilung wie die Paare von Löchern in den Seitenschenkeln eingebracht sind, zu diesen aber jeweils um eine halbe Teilung versetzt angeordnet sind.

Damit die an den vertikalen Rahmenschenkeln des Schwenkrahmens angebrachten Führungsschienen die Verschraubung der Geräteeinschübe oder Geräteschienen mit den vorderen Seitenschenkeln dieser Rahmenschenkel nicht beeinträchtigen, sieht eine Weiterbildung vor, daß die Löcher zum Einhängen von Führungsschienen in der Mittelachse des Rahmenschenkels und damit in der Mitte des abgewinkelten Stegteils angeordnet sind und daß die beiden Haken der Führungsschiene im Abstand der halben Breite dieses Stegteils von der vertikalen Vorderkante der Führungsplatte angeordnet sind, während der Befestigungslappen der vertikalen Hinterkante der Führungsplatte zugekehrt angeordnet ist.

Eine Weiterbildung der Führungsschiene ist dadurch gekennzeichnet, daß an der Führungsplatte der Führungsschiene spiegelbildlich zu der vertikalen Mittelachse derselben ein weiterer Befestigungslappen und zwei weitere Haken angeordnet sind. Auf diese Weise läßt sich eine einheitlich gestaltete Führungsschiene in den linken oder rechten vertikalen Rahmenschenkel des Schwenkrahmens einhängen.

Die Erfindung wird anhand eines in den Zeichnungen dargestellten Ausführungsbeispiels näher erläutert. Es zeigt:

Fig. 1 in Seitenansicht ein Teilstück eines vertikalen Rahmenschenkels des Schwenkrahmens mit einer daran eingehängten und festgelegten Führungsschiene,

Fig. 2 die Ansicht auf die Vorderseite des Rahmenschenkels mit der Führungsschiene in Richtung II der Fig. 1 und

Fig. 3 den Querschnitt des Rahmenschenkels des Schwenkrahmens, in Richtung III der Fig. 1 gesehen.

Der Schwenkrahmen für einen Schalt- oder Verteilerschrank weist erfindungsgemäß besonders ausgestaltete vertikale Rahmenschenkel 10 auf, die an der Unter- und der Oberkante über an sich bekannte horizontale Rahmenschenkel miteinander verbunden sind. Über die horizontalen Rahmenschenkel wird der Schwenkrahmen in an sich bekannter Weise an zwei Querträgern drehbar gelagert, die mit dem Schrank verbunden bzw. verbindbar sind.

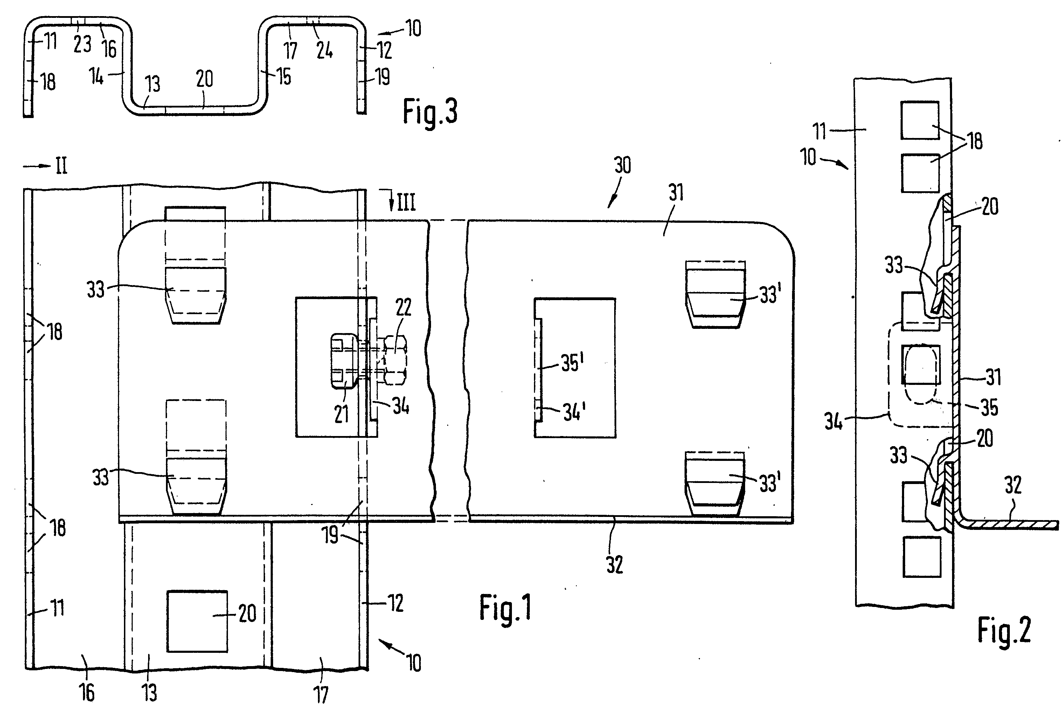

Wie der Querschnitt nach Fig. 3 zeigt, sind diese vertikalen Rahmenschenkel 10 aus einer verhältnismäßig dünnen Blechplatte gebogen. Die mäanderförmigen Abwinkelungen der Blechplatte bringen eine ausreichende Stabilität für den Schwenkrahmen. Der Rahmenschenkel ist im wesentlichen U-förmig gebogen, wobei die beiden Seitenschenkel 11 und 12 bündig enden und der Mittelsteg in der Mitte zusätzlich U-förmig eingebogen ist. Diese Einbiegung ist so, daß der Stegteil 13 mit den Endkanten der Seitenschenkel 11 und 12 bündig abschließt. Die Stegteile 14 und 15 bilden die Übergänge zu den in der Ebene des Mittelsteges verbleibenden Stegteilen 16 und 17. Wie die Ansichten nach Fig. 1 und 2 erkennen lassen, sind in den Seitenschenkeln 11 und 12 des so abgewinkelten Rahmenschenkels 10 Reihen von Löchern 18 und 19 eingebracht. Diese Löcher 18 und 19 sind paarweise angeordnet und über die Länge des Rahmenschenkels 10 in gleichmäßiger Teilung eingebracht. Die Löcher 18 und 19 in den beiden Seitenschenkeln 11 und 12 fluchten dabei. In dem Stegteil 13 sind Löcher 20 zum Einhängen von Führungsschienen 30 eingebracht und zwar in derselben Teilung, jedoch um eine halbe Teilung gegenüber den Löchern 18 und 19 in den Seitenschenkeln 11 und 12 versetzt. Die Löcher 18 und 19 sind im Querschnitt quadratisch, so daß darin an sich bekannte Käfigmuttern 21 unverdrehbar festgelegt werden können. Mit Schrauben können daran dann Geräteeinschübe oder Geräteschienen festgeschraubt werden. In den Stegteilen 16 und 17 sind Bohrungen 23 und 24 eingebracht, so daß daran ebenfalls Bauteile, Verdrahtungskabel oder dgl. befestigt werden können. Der symmetrische Aufbau des Rahmenschenkels 10 in Bezug auf die Mittelachse hat den Vorteil, daß für den linken und rechten vertikalen Rahmenschenkel des Schwenkrahmens dasselbe Ausgangsmaterial verwendet werden kann. Das Ausgangsmaterial kann auch eine entsprechend abgewinkelte Profilschiene sein, die direkt im Strangpreßverfahren oder dgl. hergestellt bzw. aus einem Blechstreifen gewalzt wird.

Die Führungsschiene 30 besteht aus einer vertikalen Führungsplatte 31, die im Bereich ihrer unteren Kante senkrecht als Auflagesteg 32 abgewinkelt ist, wie besonders die Ansicht nach Fig. 2 zeigt. In der Führungsplatte 31 sind vertikal übereinander im Abstand der Teilung der Löcher 20 Haken 33 ausgestanzt und ausgebogen, die in ihrer Breite auf die Löcher 20 abgestimmt sind und die zum Auflagesteg 32 hin offen sind. Wie Fig. 2 erkennen läßt, sind diese Haken 33 so ausgebogen, daß sie leicht in die Löcher 20 eingeführt und an den Lochwänden eingehängt werden können. Der Abstand der Haken 33 von der vertikalen Vorderkante der Führungsplatte 31 ist so, daß die eingehängte Führungsschiene 30 etwa bündig mit dem Stegteil 14 abschließt. In der Führungsplatte 31 ist zusätzlich ein Befestigungslappen 34 ausgestanzt und senkrecht zur Rückseite hin ausgebogen. Dieser Befestigungslappen 34 is vertikal gerichtet und in einem Abstand zu den Haken 33 angeordnet. Dieser Abstand ist so gewählt, daß der Befestigungslappen 34 bei eingehängter Führungsschiene 30 vor dem Seitenschenkel 12 steht und mit diesem verbunden werden kann. Ist in dem zugekehrten Loch 19 des Seitenschenkels 12 eine Käfigmutter 21 festgelegt, dann kan durch die als Langloch ausgebildete Befestigungsaufnahme 35 in dem Befestigungslappen 34 die Schraube 22 eingeführt und in die Käfigmutter 21 eingeschraubt werden. Die Führungsschiene 30 ist dann unverlierbar an dem Rahmenschenkel 10 festgelegt.

Die Geräteschiene bzw. der Geräteeinschub stützt sich auf dem Auflagesteg 32 der Führungsschiene 30 ab, die sich über den Schwenkrahmen hinaus noch in den Schrankinnenraum fortsetzen kann, um eine möglichst große Stützlange zu erreichen. Die Löcher 18 in dem Seitenschenkel 11 nehmen Käfigmuttern 21 auf, damit die Frontplatte der Geräteschienen bzw. Geräteeinschübe mitttels Schrauben 22 an dem Rahmenschenkel 10 festgelegt werden können. Es ist leicht einzusehen, daß bei Verwendung des Rahmenschenkels 10 auf der gegenüberliegenden vertikalen Seite des Schwenkrahmens die Seitenschenkel 11 und 12 die vertauschten Funktionen übernehmen. Damit die Führungsschiene 30 auch auf dieser Seite des Schwenkrahmens eingesetzt werden kann, sind spiegelbildlich zur vertikalen Mittelachse der Führungsschiene 30 in die Führungsplatte 31 ein weiterer Befestigungslappen 34' mit Befestigungsaufnahme 35' und zwei weitere Haken 33' eingebracht. Die Verteilung dieser weiteren Befestigungselemente ist genau gleich. Dabei ist noch zu erwähnen, daß die Befestigungslappen 34 und 34' jeweils in gleichem vertikalen Abstand zu dem Paar oder zugeordneten Haken 33 und 33' angeordnet sind.

## Patentansprüche

1. Schalt- oder Verteillerschrank mit einem Schwenkrahmen, der mittels zweier Lagerzapfen drahbar an einem unteren und einem oberen Querträger gelagert ist und dessen vertikale Rahmenschenkel (10) U-förmig abgewinkelt sind, wobei der Mittelsteg zusätzlich bis zu den Endkanten der Seitenschenkel (11, 12) U-förmig und symmetrisch zu den Seitenschenkeln (11, 12) abgewinkelt ist und in dem mit den Endkanten der Seitenschenkel (11, 12) bündigen Stegteil (13) eine vertikale Reihe von Löchern (20) zum Einhängen von mit ausgestanzten Haken (33) versehenen Führungsschienen (30) aufweist, dadurch gekennzeichnet.

daß die Seitenschenkel (11, 12) des Rahmenschenkels (10) jeweils mit einer Reihe von miteinander fluchtenden Löchern (18, 19) versehen sind,

daß die Löcher (20) zum Einhängen von Führungsschienen (30) für Geräteeinschübe oder Geräteschienen im Stegteil (13) in gleicher Teilung wie die Löcher (18, 19) in den Seitenschenkeln (11, 12) eingebracht sind, zu diesen aber jeweils um eine halbe Teilung versetzt sind,

daß die Führungsschiene (30) aus einer vertikalen Führungsplatte (31) besteht, die im Bereich ihrer Unterkante als horizontaler Auflagesteg (32) rechtwinklig abgewinkelt ist,

daß an der Führungsplatte (31) vertikal im Abstand der Teilung der Löcher (20) im Stegteil (13) zwei Haken (33) ausgestanzt und ausgebogen sind, die in ihrer Breite auf die Löcher (20) im Stegteil (13) des Rahmenschenkels (10) abgestimmt sind und zum Auflagesteg (32) hin offen sind,

daß an der vertikalen Führungsplatte (31) ein vertikal verlaufender Befestigungslappen (34) ausgestanzt und senkrecht zu dieser ausgebogen ist, der in einem Abstand zu den Haken (33) angeordnet ist, welcher dem Abstand der Löcher (20) im Stegteil (13) des Rahmenschenkels (10) von den Seitenschenkeln (11, 12) des Rahmenschenkels (10) entspricht, und

daß der mit einer Befestigungsaufnahme (35) versehene Befestigungslappen (34) im gleichen vertikalen Abstand zu beiden Haken (33) der Führungsplatte (31) angeordnet und mit einem der Seitenschenkel (11, 12) verbindbar ist.

2. Schalt- oder Verteilerschrank nach Anspruch 1, dadurch gekennzeichnet, daß die Reihen von Löchern (18, 19) in den Seitenschenkeln (11, 12) des Rahmenschenkels (10) als im Querschnitt quadratische Aufnahmen für darin festlegbare Käfigmuttern (21) ausgebildet sind.

3. Schalt- oder Verteilerschrank nach Anspruch 2, dadurch gekennzeichnet, daß die Löcher (18, 19) in den Seitenschenkeln (11, 12) paarweise in gleichmäßiger Teilung über die Länge der Seitenschenkel (11, 12) angeordnet sind.

4. Schalt- oder Verteilerschrank nach einem der Ansprüche 1 bis 3, dadurch gekennzeichnet, daß die Löcher (20) zum Einhängen von Führungsschienen (30) im Querschnitt quadratisch ausgebildet sind, wobei zwei Seiten der Löcher (20) parallel zu den Seitenschenkeln (11, 12) ausgerichtet sind.

5. Schalt- oder Verteilerschrank nach einem der Ansprüche 1 bis 4, dadurch gekennzeichnet, daß die Löcher (20) zum Einhängen von Führungsschienen (30) in der Mittelachse des Rahmenschenkels (10) und damit in der Mitte des abgewinkelten Stegteils (13) angeordnet sind und daß die beiden Haken (33) der Führungsschiene (30) im Abstand der halben Breite dieses Stegteiles (13) von der vertikalen Vorderkante der Führungsplatte (31) angeordnet sind, während der Befestigungslappen (34) der vertikalen Hinterkante der Führungsplatte (31) zugekehrt angeordnet ist.

6. Schalt- oder Verteilerschrank nach Anspruch 5, dadurch gekennzeichnet, daß an der Führungsplatte (31) der Führungsschiene (30) spiegelbildlich zu der vertikalen Mittelachse derselben ein weiterer Befestigungslappen (34') und zwei weitere Haken (33') angeordnet sind.

## Revendications

1. Armoire de commutation out de distribution comportant un châssis pivotant qui est articulé au moyen de deux tourillons sur une traverse inférieure et une traverse supérieure et dont les montants verticaux (10) sont pliés en U, leur dos étant par ailleurs plié de manière à former un U dont la base revient au niveau des bords des ailes latérales (11, 12) et qui est symétrique par rapport à ces ailes (11, 12), la partie (13) de ce dos qui se trouve dans le plan des bords desdites ailes (11, 12) comportant une rangée verticale de trous (20) des suspension de rails de guidage (30) dans lesquels des crochets (33) sont découpés, cette armoire étant caractérisée en ce que:

les ailes (11, 12) du montant (10) du châssis comportent chacune une rangée de trous (18, 19) alignés les une par rapport aux autres;

les trous (20) formés dans la partie (13) du dos pour la suspension de rails (30) de guidage de tiroirs ou rails porte-appareils ont le même intervalle que les trous (18, 19) des ailes (11, 12), mais sont décalés de ceux-ci d'un demi-pas ou demi-intervalle;

le rail de guidage (30) se compose d'une plaque verticale (31), qui est pliée àngle droit sur un bord inférieur en formant un rebord horizontal (32) d'appui;

dans cette plaque de guidage (31) sont découpés et pliés deux crochets (33) dont l'écartement vertical est égal à l'intervalle des trous (20) de la partie (13) du montant (10), dont la largeur correspond à celle de ces trous (20) et qui s'ouvrent du côté du rebord d'appui (32);

une patte de fixation (34) verticale est découpée dans ladite plaque verticale de guidage (31) et est repliée perpendiculairement à celle-ci, à une distance des crochets (33) correspondant à la distance comprise entre les trous (20) de la partie (13) du dos du montant (10) du châssis et les ailes (11, 12) de ce montant (10); et

cette parre de fixation (34), percée d'une ouverture de fixation (35), est disposée à la même distance verticale des deux crochets (33) de la plaque de guidage (31) et elle peut être reliée à l'une des ailes latérales (11, 12).

2. Armoire de commutation ou de distribution selon la revendication 1, caractérisée en ce que les trous (18, 19) des rangées formées dans les ailes (11, 12) du montant (10) du châssis ont la conformation d'ouvertures à section droite carrée à loger et immobiliser des écrous (21) ainsi emprisonnés.

3. Armoire de commutation ou de distribution selon la revendication 2, caractérisée en ce que les trous (18, 19) des ailes (11, 12) sont disposés par couples, à un intervalle constant, sur la longueur de ces ailes (11, 12).

4. Armoire de commutation ou de distribution selon l'une quelconque des revendications précédentes, caractérisée en ce que les trous (20) de suspension de rails de guidage (30) ont une forme carrée en section droite, de sorte que deux des côtés des trous (20) sont parallèles aux ailes (11, 12).

5. Armoire de commutation ou de distribution selon l'une quelconque des revendication précédentes, caractérisée en ce que les trous (20) de suspension de rails de guidage (30) sont disposés dans l'axe du montant (10) du châssis et donc au milieu de la partie repliée (13) du dos de ce montant; et les deux crochets (33) des rails de guidage (30) sont disposés à une distance de la face verticale antérieure de la plaque de guidage (31) égale à la moitié de la largeur de cette partie (13) du dos, tandis, que la patte de fixation (34) est adjacente à la face verticale postérieure de cette plaque (31).

6. Armoire de commutation ou de distribution selon la revendication 5, caractérisé en ce qu'une autre patte de fixation (34') et deux autres crochets (33') sont disposés symétriquement par rapport à l'axe vertical de la plaque (31) du rail de guidage (30).

**Claims**

1. Switch or distribution cabinet with a pivoting frame which, by means of two journal pins, is pivoted to a lower and an upper crossarm, and whose vertical frame pieces (10) are U-shapedly angled off, with the central bridge being additionally angled off up to the terminating edges of the side legs (11, 12), i.e. U-shapely and symmetrically in relation to the side legs (11, 12) and, in the bridge portion (13) which is flush with the terminating edges of the side legs (11, 12), comprises a vertical row of holes (20) for the hooking-in of guide rails (30) provided with punched-out hooks (33), characterized in that

said side legs (11, 12) of said frame piece (10) are each provided with a row of holes (18, 19) which are in alignment with one another,

said holes (20) for the hooking-in of said guide rails (30) for equipment subracks or equipment rails, as provided for in said bridge portion (13), are arranged in the same division as said holes (18, 19) as provided for in said side legs (11, 12), but are each staggered by half a division in relation thereto,

said guide rails (30) consists of a vertical guide plate (31) which is rectangularly angled off within the area of its lower edge for serving as a horizontal supporting bridge member (32),

in said guide plate (31), vertically in relation to the division spacing of said holes (20) in said bridge portion (13), two hooks (33) are punched out and bent over, with said hooks (33) being adapted in their widths to said holes (20) as provided for in said bridge portion (13) of said frame piece (10), and open toward said supporting bridge member (32),

on said vertical guide plate (31), a vertically extending mounting flap (34) is punched out and bent over vertically in relation thereto, and arranged at a spacing from said hooks (33), which corresponds to the spacing of said holes (20) in said bridge portion (13), from said side legs (11, 12) of said frame piece (10), and

said mounting flap (34) which is provided with a mounting receptacle (35), is arranged at the same vertical spacing in relation to said two hooks (33) of said guide plate (31) and capable of being connected to one of said side legs (11, 12).

2. A switch or distribution cabinet as claimed in claim 1, characterized in that said rows of holes (18, 19) in said side legs (11, 12) of said frame piece (10) are designed as cross-sectionally square receptacles for cage nuts (21) which are capable of being secured therein.

3. A switch or distribution cabinet as claimed in claim 2, characterized in that said holes (18, 19) in said side legs (11, 12) are arranged in pairs at equally spaced divisional relations throughout the lengths of said side legs (11, 12).

4. A switch or distribution cabinet as claimed in any one of claims 1 to 3, characterized in that said holes (20) for the hooking-in of said guide rails (30) are of a cross-sectionally square design, with two sides of said holes (20) being aligned to extend parallel in relation to said side legs (11, 12).

5. A switch or distribution cabinet as claimed in any one of claims 1 to 4, characterized in that said holes (20) for the hooking-in of said guide rails (30) are arranged in the centerline axis of said frame piece (10) and, consequently, in the center of said angled-off bridge portion (13), and that said two hooks (33) in said guide rails (30) are arranged at a spacing corresponding to half the width of said bridge portion (13), from the vertical front edge of said guide plate (31) while said mounting flap (34) is arranged to face the vertical rear edge of said guide plate (13).

6. A switch or distribution cabinet as claimed in claim 5, characterized in that on said guide plate (31) of said guide rail (30), and mirror-invertedly in relation to the vertical centerline axis thereof, a further mounting flap (34') and two further hooks (33') are arranged.

Fig.3

Fig.1

Fig.2

0012 209